# EUROPÄISCHE PATENTSCHRIFT

(11) **EP 0 986 451 B1**
(45) Veröffentlichungstag und Bekanntmachung des Hinweises auf die Patenterteilung: **12.12.2001**
(21) Anmeldenummer: 98922779.8
(22) Anmeldetag: 28.04.1998
(51) Int. Cl.: B25B 23/14

(54) **VORSATZ FÜR EINEN SCHRAUBER**
SCREWDRIVER ADAPTER
ADAPTATEUR POUR TOURNEVIS

(30) Priorität: 02.06.1997 DE 19723056
(43) Veröffentlichungstag der Anmeldung: 22.03.2000
(73) Patentinhaber: SFS Industrie Holding AG, 9435 Heerbrugg (CH)
(72) Erfinder: GASSER, Daniel, CH-9444 Diepoldsau (CH); PALM, Erich, CH-9434 Au (CH); SIEBER, Sven, CH-9444 Diepoldsau (CH)
(74) Vertreter: Ludescher, Hans
(86) Internationale Anmeldenummer: EP9802499
(87) Internationale Veröffentlichungsnummer: WO9855269

(56) Entgegenhaltungen:
- EP-A- 0 723 086
- US-A- 4 593 583

## Beschreibung

Die Erfindung betrifft einen Vorsatz für einen Schrauber, mit einem Schrauberangriffsteil und mit einer einen Werkzeugangriff aufweisenden Nuß zum Eindrehen einer Schraube mit einem bei beabsichtigtem Überdrehen abbrech-, abdreh- oder abreißbaren Angriffsabschnitt, wobei die Nuß einen von dem Werkzeugangriff ausgehenden Kanal aufweist.

Um eine Überdrehsicherung für Schrauben zu schaffen, d.h. einen festen Sitz für Schrauben ohne Beschädigung des Gewindebereiches zu bewerkstelligen, wird u.a. die Möglichkeit vorgesehen, daß der Angriffsabschnitt einer Schraube oder ein entsprechender Teil des Angriffsabschnittes beim endgültigen Setzen einer Schraube abgebrochen, abgedreht oder abgerissen wird, womit der Setzvorgang beendet ist. In der Regel wird eine solche Überdrehsicherung durch Anordnung einer Sollbruchstelle geschaffen. Die dabei abgebrochenen, abgedrehten oder abgerissenen Angriffsabschnitte können jedoch nicht bei jeder Verarbeitungsart anschließend einfach herumliegen, da unter Umständen eine Beschädigung der Oberfläche der befestigten Werkstücke öder darüberliegender Abdeckungen erfolgen kann.

Aus der EP 0 723 086 A ist bereits ein Vorsatz für einen Schrauber bekannt geworden, welcher einen Schrauberangriffsteil und eine einen Werkzeugangriff bildende Nuß aufweist. Dieser Vorsatz zum Eindrehen einer Schraube ist mit einem bei beabsichtigtem Überdrehen abbrech-, abdreh- oder abreißbaren Angriffsabschnitt versehen. Die Nuß weist einen vom Werkzeugangriff ausgehenden Kanal auf, durch welchen vorerst in axialer Richtung und daran anschließend in radialer Richtung ein abgebrochener Angriffsabschnitt einer Schraube hinausfallen kann. An der Rückseite der mit dem Werkzeugangriff versehenen Nuß ist ein Freiraum vorgesehen, der über einen Winkel von mehr als 180° offen ist, so daß der abgebrochene Angriffsabschnitt nach Verlassen des Kanals frei herausfallen kann. Der offene Abschnitt ist jedoch mittels einer verschießtzen hülse abgeschlossen.

Die vorliegende Erfindung hat sich daher zur Aufgabe gestellt, einen Vorsatz für einen Schrauber zu schaffen, mit welchem die abgebrochenen, abgedrehten oder abgerissenen Angriffsabschnitte einer Schraube aufgenommen und gesammelt werden können.

Diese aufgabe ist erfindungsgemäß durch einen vorsatz nach Anspruch 1 gelöst.

Durch diese erfindungsgemäße Maßnahme wird eine Möglichkeit geschaffen, daß ein entsprechender Angriffsabschnitt unmittelbar nach dem Abbrechen, Abdrehen oder Abreißen durch einen Kanal in einen Innenraum eines Aufnahmeteiles gelangen kann, wo eine Vielzahl solcher abgetrennter Angriffsabschnitte aufgenommen werden kann. Sobald eine entsprechende Menge solcher Angriffsabschnitte in dem Innenraum des Aufnahmeteiles gesammelt ist, kann dieser geleert werden. Dadurch erübrigt sich ein zusätzlicher Arbeitsaufwand zum Auflesen bzw. Einsammeln der abgetrennten Angriffsabschnitte.

Da der Aufnahmeteil topfartig ausgebildet ist, wobei dessen offene Seite von der verdrehfest und axial gesichert eingesetzten Nuß bis auf den in der Nuß durchgehenden Kanal verschlossen ist, kann die Nuß selbst für die Entleerung des Aufnahmeteiles entfernt werden, so daß keine zusätzlichen Maßnahmen mit entsprechenden Öffnungen im Aufnahmeteil vorgesehen werden müssen. Deshalb kann der Aufnahmeteil in konstruktiv einfacher Weise praktisch im Wesentlichen als Hohlzylinder, welcher auf der offenen Seite durch die Nuß selbst verschlossen ist, ausgeführt werden.

Gerade durch diese auswechselbare Halterung der Nuß ergeben sich weitere Möglichkeiten. So ist es bei einer Ausführungsvariante möglich, daß die Nuß an ihren beiden Enden mit einem Werkzeugangriff ausgeführt und mit einem der beiden axial voneinander beabstandeten Enden verdrehfest und axial gesichert in den Aufnahmeteil einsetzbar ist. Es besteht also zur Erzielung einer beispielsweise längeren Lebensdauer der Nuß die Möglichkeit, dieselbe an ihren beiden Enden mit einem Werkzeugangriff auszuführen.

In diesem Zusammenhang ist es von besonderem Vorteil, wenn an den beiden Enden der Nuß zwei verschieden gestaltete Werkzeugangriffe zum Erfassen von verschiedenen Ausbildungen von Angriffsabschnitten vorgesehen sind. Damit ist ein Einsatz der Nuß bei verschiedenen Angriffsabschnitten von Schrauben möglich, insbesondere auch bei Schrauben, die gleichzeitig zwei verschiedene Angriffsabschnitte aufweisen. In einem solchen Falle ist der eine Angriffsabschnitt abbrech-, abdreh- oder abreißbar ausgeführt, wohingegen der andere Angriffsabschnitt dazu dient, die bereits endgültig gesetzte Schraube bei Bedarf später wieder lösen zu können. Diese beiden Angriffsabschnitte haben jedoch grundsätzlich eine andere Form und/oder Größe, und es kann an den beiden Enden der Nuß der jeweils gewünschte Werkzeugangriff ausgebildet werden. Natürlich ist dabei nur beim Eindrehen der Schraube der eine Werkzeugangriff und der Aufnahmeteil notwendig, da ja nur beim Eindrehen ein abbrech-, abdreh- oder abreißbarer Angriffsabschnitt an einer Schraube vorhanden ist. Es besteht somit jedoch die Möglichkeit, den Vorsatz für den Schrauber universeller einzusetzen, obwohl bei solchen Schrauben die Häufigkeit des Eindrehvorganges wesentlich größer ist als diejenige des Ausdrehens von Schrauben.

Damit die einzudrehende Schraube mit ihrem Angriffsabschnitt in der Nuß entsprechend gehalten werden kann, bis die Schraube am Werkstück angesetzt ist, wird erfindungsgemäß vorgeschlagen, daß im Bereich wenigstens eines der Werkzeugangriffe der Nuß in radialer Richtung federnd in die Ausnehmung der Werkzeugangriffe eingreifende Halteelemente vorgesehen sind. Damit ist die Möglichkeit gegeben, die Schraube über ihren Angriffsabschnitt durch entsprechende Krafteinwirkung unverlierbar einzustecken und besser ansetzen zu können.

Damit das Drehmoment ordnungsgemäß vom Vorsatz auf die Schraube übertragen werden kann, bedarf es einer verdrehfesten Halterung zwischen Aufnahmeteil und Nuß. Eine Ausführungsvariante sieht dabei vor, daß annähernd im Mittelbereich bezogen auf die axiale Länge der Nuß ein umlaufender Bund mit einer Verzahnung, einer Mehrkantausbildung oder dergleichen ausgebildet ist, und daß am offenen Randbereich des topfartigen Aufnahmeteiles zur Drehmitnahme der Nuß eine dazu korrespondierende Verzahnung, Mehrkantausbildung oder dergleichen vorgesehen ist. Es ist dadurch eine einfache, durch axiales Zusammenstecken des Aufnahmeteiles und der Nuß wirksame Verbindung zur Übertragung des notwendigen Drehmomentes geschaffen, d.h. es ist keine komplizierte Montage oder irgendeine Notwendigkeit des Festsetzens von Schrauben oder Kupplungen erforderlich.

Die einfache Montagemöglichkeit der Nuß in einem Aufnahmeteil wird insbesondere noch dadurch verbessert, indem mit Abstand vom jeweiligen Ende der Nuß eine Ringnut ausgebildet ist, in welche zur axialen Halterung der Nuß ein federnder, in eine Nut in der Innenwandung des topfartigen Aufnahmeteiles eingesetzter Ringkörper, z.B. ein O-Ring, eingreift. Mit dem Einstecken zur Herstellung der Drehverbindung kann zugleich auch eine axiale Sicherung zwischen den beiden Teilen, nämlich zwischen der Nuß und dem Aufnahmeteil, erzielt werden. Da die axiale Halterung keine großen Kräfte übertragen muß, ist eine einfache Montage und Demontage der Nuß, einerseits zum Wechseln der auf beiden Enden verschiedenen Werkzeugangriffe und andererseits zum Entleeren der im Innenraum des Aufnahmeteiles angesammelten Angriffsabschnitte, möglich.

Weitere erfindungsgemäße Merkmale und besondere Vorteile werden in der nachstehenden Beschreibung anhand der Zeichnung noch näher erläutert. Es zeigen:
Fig. 1 einen Schnitt durch einen erfindungsgemäßen Vorsatz für einen Schrauber;
Fig. 2 eine Ansicht einer beispielsweise mit diesem Vorsatz bedienbaren Schraube;
Fig. 3 eine Ansicht III-III in Fig. 1.

Ein Vorsatz 1 für einen Schrauber besteht bei der erfindungsgemäßen Art und Weise aus einem Aufnahmeteil 3 und einer Nuß 2. An den Aufnahmeteil 3 schließt ein Schrauberangriffsteil 4 an, mit welchem die Drehmitnahme und die axiale Halterung in einem Schrauber bewerkstelligt werden.

Dieser erfindungsgemäße Vorsatz soll vor allem zum Eindrehen von Schrauben 17, welche einen beim beabsichtigten Überdrehen abbrech-, abdreh- oder abreißbaren Angriffsabschnitt 18 aufweisen, verwendet werden. Zu diesem Zweck besitzt die Nuß 2 einen Werkzeugangriff 6, welcher im Wesentlichen korrespondierend zum Angriffsabschnitt 18 der Schraube 17 ausgeführt ist. An den Werkzeugangriff 6 schließt sich in der Nuß 2 ein Kanal 8 an, welcher in einen Innenraum 5 des vorteilhaft topfartig ausgebildeten Aufnahmeteiles 3 mündet.

Wenn nun die Schraube 17 gesetzt wird und ein Drehmoment auftritt, welches beispielsweise bei Anordnung einer Sollbruchstelle am schraubenseitigen Ende des Angriffsabschnittes 18 ein Abdrehen des Angriffsabschnittes 18 bewirkt, dann könnte der Vorsatz 1 wohl weiterdrehen, ohne daß sich die Schraube 17 selbst weiter dreht, jedoch ist dann der Eindrehvorgang für die Schraube beendet. Der abgerissene bzw. abgedrehte Angriffsabschnitt 18 gelangt dann unmittelbar in den Kanal 8 und von dort in den Innenraum 5 des Aufnahmeteiles 3. Die abgedrehten Aufnahmeteile 18 werden somit in dem Kanal 8 und in dem daran anschließenden Innenraum 5 der Reihe nach aufgenommen.

Eine einfache Variante ist dann gegeben, wenn der Aufnahmeteil 3 topfartig ausgebildet ist, wobei die Nuß 2 selbst praktisch die offene Seite des Aufnahmeteiles 3 verschließt, so daß in den Innenraum 5 hinein lediglich noch der Kanal 8 über den Werkzeugangriff 6 offen ist.

Natürlich muß eine entsprechend verdrehfeste Verbindung zwischen der eingesetzten Nuß 2 und dem Aufnahmeteil 3 geschaffen werden, und auch eine axiale Sicherung ist vorzusehen, damit die Nuß 2 nicht ungewollt aus dem Aufnahmeteil 3 herausfällt oder herausgedrängt wird.

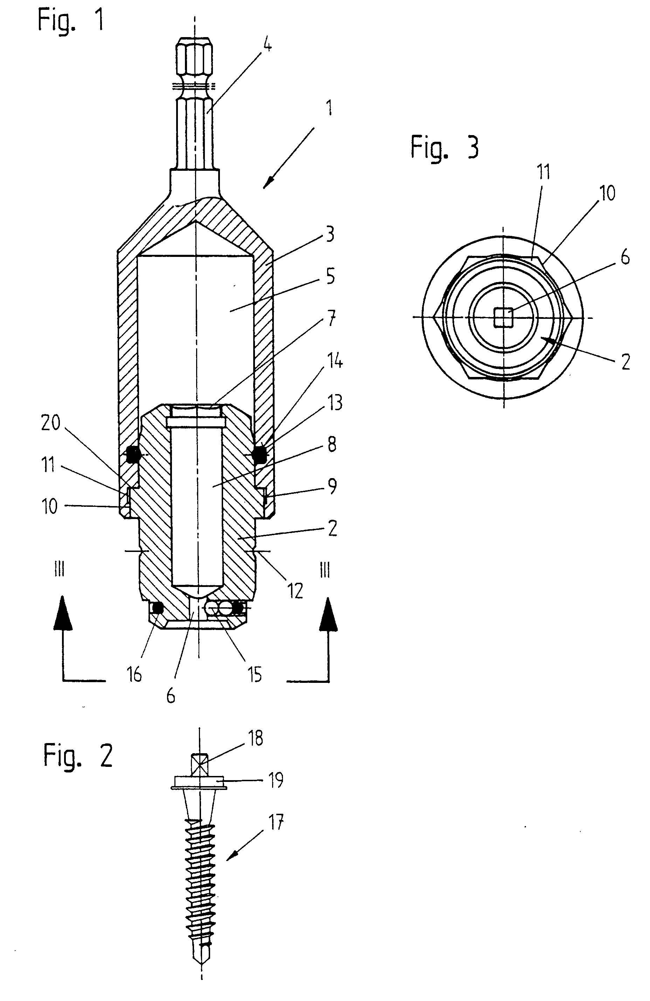

Bisher wurde davon gesprochen, daß die Nuß an ihrem einen Ende einen Werzeugangriff 6 aufweist, Da die Nuß 2 selbst den Verschluß des Aufnahmeteiles 3 bildet, kann zusätzlich noch eine vorteilhafte Konstruktion geschaffen werden, indem die entsprechenden Teile zur verdrehfesten und axial gesicherten Anordnung der Nuß sozusagen spiegelbildlich an zwei verschiedenen Enden ausgeführt sind. Dann ist es möglich, an beiden axial voneinander beabstandeten Enden der Nuß 2 Werkzeugangriffe 6 bzw. 7 vorzusehen, welche zweckmäßig verschieden gestaltet sind, um verschiedene Ausbildungen von Angriffsabschnitten 18 bzw. 19 aufnehmen zu können. Bei der besonderen Schraube 17 nach Fig. 2 sind zwei Angriffsabschnitte 18 und 19 vorgesehen, wobei der Angriffsabschnitt 18 aufgrund einer Solibruchstelle abdreh- bzw. abreißbar ist und der Angriffsabschnitt 19 dazu dient, die Schraube gegebenenfalls wieder herausdrehen zu können. Dazu bedarf es eines getrennten Angriffsabschnittes 19, der sinnvollerweise auch wesentlich größer ausgebildet ist und nicht mit dem gleichen Werkzeugangriff 6 der Nuß 2 erfaßt werden kann. Bei der gezeigten Darstellung ist der Angriffsabschnitt 18 beispielsweise als Vierkant ausgeführt und der Angriffsabschnitt 19 als Sechskant. Dementsprechend wird beim Eindrehen der Schraube der Werkzeugangriff 6 zum Einsatz kommen und bei einem eventuell notwendigen Herausdrehen der Schraube 17 der Werkzeugangriff 7.

Es wäre aber auch durchaus denkbar, zwei gleich gestaltete Werkzeugangriffe 6 bzw. 7 an den beiden Enden der Nuß 2 vorzusehen, um die Lebensdauer einer einzigen Nuß 2 zu verdoppeln, was erreicht wird, indem nach einem langen Gebrauch des einen Endes der Nuß dieselbe gewendet wird.

Damit die mit ihrem Angriffsabschnitt 18 vorab eingesetzten Schrauben 17 eine ausreichende axiale Halterung in der Nuß haben, bis die Schraube am entsprechenden Werkstück endgültig angesetzt bzw. teilweise eingedreht ist, kann bei der erfindungsgemäßen Nuß 2 ebenfalls in bekannter Weise ein in radialer Richtung federnd in die Ausnehmung des Werkzeugangriffes 6 eingreifendes Halteelement 15 vorgesehen werden. Dieses Halteelement 15, welches beispielsweise in Form einer Kugel oder eines Bolzens ausgeführt ist, kann durch einen entsprechenden Federkörper 16 in radialer Richtung gegen den Werkzeugangriff hin belastet werden.

Für die Drehmitnahme und die axiale Sicherung zwischen Nuß 2 und Aufnahmeteil 3 sind entsprechende Maßnahmen vorzusehen. Bei der gezeigten Ausführungsvariante ist die Nuß mit einem umlaufenden Bund versehen, welcher inetwa im Mittelbereich bezogen auf die axiale Länge der Nuß 2 angeordnet ist. Der Bund 9 weist an seinem Umfang vorteilhaft eine Mehrkantausbildung 11 auf. Am offenen Randbereich des topfartigen Aufnahmeteiles 3 ist dann zur Drehmitnahme der Nuß 2 eine dazu korrespondierende Mehrkantausbildung 10 in Form einer entsprechenden Öffnung vorgesehen. Außerdem ist mit Abstand vom jeweiligen Ende der Nuß 2 eine Ringnut 12 ausgebildet, in welche zur axialen Halterung der Nuß 2 ein federnder, in eine Nut 14 in der Innenwandung des topfartigen Aufnahmeteiles 3 eingesetzter Ringkörper 13 eingreift. Hier kann auch eine Art O-Ring eingesetzt werden. Es ist nun gleichgültig, mit welchem Ende die Nuß 2 in den Innenraum 5 des Aufnahmeteiles 3 eingeschoben wird, da durch die entsprechende Ausgestaltung im Bereich des Bundes 9 und die korrespondierende Anordnung am freien Ende des Aufnahmateiles 3 stets eine Drehmitnahme und durch den Ringkörper 13 und die zugehörigen Nuten 12 eine axiale Sicherung gewährleistet sind. Der Einschraubdruck in axialer Richtung wird über den Bund 9 übertragen, da dieser an einem Anschlag 20 des Aufnahmeteiles 3 abgestützt ist.

Anstelle einer Mehrkantausbildung 11 bzw. 10 zur gegenseitigen Drehmitnahme ist es auch möglich, zur gegenseitigen Verbindung eine Art Verzahnung vorzusehen, über welche die Nuß 2 und der Aufnahmeteil 3 formschlüssig ineinander eingreifen können.

Wie schon ausgeführt, genügt an sich an einem Ende der Nuß 2 ein entsprechender Werkzeugangriff 6, so daß die Nuß 2 selbst wesentlich kürzer ausgebildet werden könnte. In einem solchen Falle bedarf es dann lediglich der entsprechenden Halterung durch den Ringkörper 13, der in eine Nut 14 eingreift, und der Anordnung des Bundes 9 mit der entsprechenden Verzahnung bzw. Mehrkantausbildung oder dergleichen.

Gerade bei in der Größe und Form recht unterschiedlichen Werkzeugangriffen 6 und 7 wirkt sich positiv aus, daß an den Werkzeugangriff 6 ein bezogen auf dessen Querschnitt im Querschnitt vergrößerter Kanal 8 anschließen kann, um einen Abtransport der abgerissenen Angriffsabschnitte 18 zu erleichtern.

Es sind verschiedene andere Ausführungsvarianten denkbar, wie die Nuß 2 mit dem Aufnahmeteil 3 verbunden werden kann. Es wäre ebenfalls denkbar, die Nuß 2 beispielsweise mit einer außen umlaufenden Nut oder aber topfförmig auszubilden, um den Randbereich des topfartigen Aufnahmeteiles übergreifen zu können. Unter Umständen wäre dann die entsprechende Verbindung nicht an der Innenseite des topfartigen Aufnahmeteiles vorgesehen, sondern an der Außenwandung des Aufnahmeteiles 3. So könnte eine Verbindung z.B. mittels eines gewindeartigen Aufdrehens, mittels einer Art Bajonettverschluß oder in gleicher Weise mittels federnder Ringkörper und entsprechend anders gestalteten Verzahnungen, Mehrkantausbildungen oder dergleichen erfolgen.

Der erfindungsgemäße Vorsatz erweist sich insofern noch als besonders vorteilhaft, weil er ja nicht unbedingt beim Eindrehen von Schrauben eingesetzt werden muß oder nur dort eingesetzt werden kann, wo abbrech-, abdreh- oder abreißbare Angriffsabschnitte vorhanden sind. Aufgrund der sehr einfachen Konstruktion und der besonderen Ausbildung der Nuß selbst kann ein solcher Vorsatz zum Eindrehen jeder Art von Schrauben eingesetzt werden.

## Patentansprüche

1. Vorsatz für einen Schrauber, mit einem Schrauberangriffsteil (4) und mit einer einen Werkzeugangriff (6, 7) aufweisenden Nuß (2) zum Eindrehen einer Schraube (17) mit einem bei beabsichtigtem Überdrehen abbrech-, abdreh- oder abreißbaren Angriffsabschnitt, wobei die Nuß (2) einen von dem Werkzeugangriff (6, 7) ausgehenden Kanal (8) aufweist und der Kanal (8) in einen Innenraum (5) eines Aufnahmeteiles (3) für von einer Schraube (17) abgebrochene, abgedrehte oder abgerissene Angriffsabschnitte (18) mündet, **dadurch gekennzeichnet, daß** das Aufnahmeteil (3) topfartig ausgebildet ist und die offene Seite des Innenraums von der verdrehfest und axial gesichert eingesetzten Nuß (2) bis auf den in der Nuß (2) durchgehenden Kanal (8) verschlossen ist und dessen entgegengesetzte Seite mit dem Schrauberangriffsteil (4) versehen ist.

2. Vorsatz nach Anspruch 1, **dadurch gekennzeichnet, daß** die Nuß (2) an ihren beiden Enden mit einem Werkzeugangriff (6, 7) ausgeführt und mit einem der beiden axial voneinander beabstandeten Enden verdrehfest und axial gesichert in den Aufnahmeteil (3) einsetzbar ist.

3. Vorsatz nach Anspruch 1 oder 2, **dadurch gekennzeichnet, daß** an den beiden Enden der Nuß (2) zwei verschieden gestaltete Werkzeugangriffe (6, 7) zum Erfassen von verschiedenen Ausbildungen von Angriffsabschnitten (18, 19) vorgesehen sind.

4. Vorsatz nach einem der Ansprüche 1 bis 3, **dadurch gekennzeichnet, daß** im Bereich wenigstens eines der Werkzeugangriffe (6, 7) der Nuß (2) in radialer Richtung federnd in die Ausnehmung der Werkzeugangriffe (6, 7) eingreifende Halteelemente (15) vorgesehen sind.

5. Vorsatz nach einem der Ansprüche 1 bis 4, **dadurch gekennzeichnet, daß** annähernd im Mittelbereich bezogen auf die axiale Länge der Nuß (3) ein umlaufender Bund (9) mit einer Verzahnung, einer Mehrkantausbildung (11) oder dergleichen ausgebildet ist, und daß am offenen Randbereich des topfartigen Aufnahmeteiles (3) zur Drehmitnahme der Nuß (2) eine dazu korrespondierende Verzahnung, Mehrkantausbildung (10) oder dergleichen vorgesehen ist.

6. Vorsatz nach einem der Ansprüche 1 bis 5, **dadurch gekennzeichnet, daß** mit Abstand vom jeweiligen Ende der Nuß (2) eine Ringnut (12) ausgebildet ist, in welche zur axialen Halterung der Nuß (2) ein federnder, in eine Nut (14) in der Innenwandung des topfartigen Aufnahmeteiles (3) eingesetzter Ringkörper (13), z.B. ein O-Ring, eingreift.

## Claims

1. An attachment for a screwdriver, with a screwdriver engagement part (4) and with a core (2) having a tool engagement (6,7) for screwing in a screw (17) having an engagement portion which can be broken off, turned off or broken off when intentionally overtightened, wherein the core (2) has a passage (8) extending from the tool engagement (6,7) and the passage (8) opens into an inner chamber (5) of a receptacle (3) for engagement portions (18) broken off, turned off or broken off from a screw (17), **characterised in that** the receptacle (3) is cup-shaped and the open side of the inner chamber is closed by the core (2), which is inserted in a manner precluding independent rotation and axially located, except for the passage (8) passing through the core (2) and the opposite side of which is provided with the screwdriver engagement part (4).

2. An attachment according to Claim 1, **characterised in that** at both of its ends the core (2) is formed with a tool engagement (6,7) and can be inserted with one of the two axially spaced apart ends into the receptacle (3) in a manner precluding independent rotation and axially located.

3. An attachment according to Claim 1 or 2, **characterised in that** at the two ends of the core (2) two differently shaped tool engagements (6,7) are provided for gripping different designs of engagement portions (18,19).

4. An attachment according to any one of Claims 1 to 3, **characterised in that** retaining elements (15) engaging in radial direction in a spring-loaded manner into the recess of the tool engagements (6,7) are provided in the vicinity of at least one of the tool engagements (6,7) of the core (2).

5. An attachment according to any one of Claims 1 to 4, **characterised in that** an annular shoulder (9) with a toothing, a polygonal design (11) or the like is formed approximately in the central region in relation to the axial length of the core (3) [sic], and **in that** on the open edge zone of the cup-like receptacle (3) a toothing, polygonal design (10) or the like corresponding thereto is provided for rotary entrainment of the core (2).

6. An attachment according to any one of Claims 1 to 5, **characterised in that** an annular groove (12) is formed at a distance from the respective end of the core (2), in which groove engages a resilient annular member (13), for example an O-ring, inserted into a groove (14) in the inner wall of the cup-like receptacle (3), for axial retention of the core (2).

## Revendications

1. Embout pour une visseuse, comprenant un emmanchement pour la visseuse et une noix (2) munie d'organes de prise d'outil (6, 7) pour visser une vis (17) munie d'un segment de prise destiné à se casser, à s'arracher ou à s'enlever par torsion en cas de rotation excessive intentionnelle,
la noix (2) ayant un canal (8) partant des organes de prise de l'outil (6, 7) et (8) débouchant dans une cavité (5) d'une pièce de réception (3) pour recevoir le segment de prise (18) arraché, détaché ou cassé, de la vis (17),
**caractérisé en ce que**
la pièce de réception (3) a une forme de pot et le côté ouvert de son volume intérieur est fermé à l'exception du canal (8) traversant la noix (2), en étant logé de manière solidaire en rotation et axialement dans la cavité intérieure et son côté opposé est muni de l'emmanchement (4) pour la visseuse.

2. Embout selon la revendication 1,
**caractérisé en ce que**
la noix (2) comporte un organe de prise d'outil (6, 7) à chacune de ses deux extrémités et l'une des deux extrémités écartées l'une de l'autre, se loge solidairement en rotation et axialement dans la pièce de réception (3).

3. Embout selon l'une quelconque des revendications 1 ou 2,
**caractérisé en ce que**
les deux extrémités de la noix (2) comportent des organes de prise d'outil (6, 7), de formes différentes, pour recevoir des réalisations différentes de segments de prise (18, 19).

4. Embout selon l'une quelconque des revendications 1 à 3,
**caractérisé en ce que**
dans la zone d'au moins l'un des organes de prise d'outil (6, 7) de la noix (2) il y a des éléments de retenue (15), élastiques dans la direction radiale et qui viennent en saillie dans la cavité des organes de prise d'outil (6, 7).

5. Embout selon l'une quelconque des revendications 1 à 4,
**caractérisé en ce que**
sensiblement dans la zone centrale par rapport à la longueur axiale de la noix (3) il est prévu une collerette périphérique (9) avec une denture, une forme de pans multiples (11) ou analogue et la zone de bord ouverte de la pièce de réception (3) en forme de pot comporte une denture, une forme à pans multiples (10) ou un moyen analogue, correspondant, pour entraîner en rotation la noix (2).

6. Embout selon l'une quelconque des revendications 1 à 5,
**caractérisé en ce qu'**
à une certaine distance de chaque extrémité de la noix (2) une rainure annulaire (12) reçoit un organe annulaire (13), par exemple un anneau torique pour la fixation axiale de la noix (12), cet anneau état logé élastiquement dans une rainure (14) de la paroi intérieure de la pièce de réception (3) en forme de pot.
